# EUROPÄISCHE PATENTSCHRIFT

(11) **EP 1 722 191 B1**
(45) Veröffentlichungstag und Bekanntmachung des Hinweises auf die Patenterteilung: **22.05.2019**
(21) Anmeldenummer: 06018462.9
(22) Anmeldetag: 06.11.2001
(51) Int. Cl.: G01C 3/06, G01S 17/48, G01S 17/87, G01S 7/481, G01B 11/02, G01S 7/491

(54) **Abstandsbestimmung**
Distance determination
Détermination de distance

(30) Priorität: 29.11.2000 DE 10059156
(43) Veröffentlichungstag der Anmeldung: 15.11.2006
(62) Teilanmeldung aus: 01126323.3
(73) Patentinhaber: SICK AG, 79183 Waldkirch (DE)
(72) Erfinder: Waslowski, Kai, 79183 Waldkirch (DE); Merettig, Gerhard, 79350 Sexau (DE); Ringwald, Siegfried, 79215 Elzach (DE)
(74) Vertreter: Manitz Finsterwald Patent- und Rechtsanwaltspartnerschaft mbB

(56) Entgegenhaltungen:
- EP-A- 0 281 085
- WO-A-98/21550
- DE-A- 4 004 530
- DE-C- 19 732 376
- US-A- 4 825 091

## Beschreibung

Die Erfindung betrifft ein Verfahren sowie eine Vorrichtung zum Bestimmen des Objektabstands zwischen einem nach dem Triangulationsprinzip arbeitenden optoelektronischen Sensor und einem Tastobjekt.

Bei bekannten Sensoren, die nach dem Triangulationsprinzip arbeiten, wird ein ausgesandter Lichtfleck auf dem Objekt, dessen Abstand bestimmt werden soll, abgebildet und vom Objekt auf einen ortsauflösenden Empfänger abgebildet. Die Position des reflektierten und/oder remittierten Lichtflecks auf dem Empfänger ist von dem auch als Tastweite bezeichneten Abstand zwischen dem Sensor und dem Objekt abhängig. Die Lage des Schwerpunkts des Lichtflecks auf dem Empfänger kann somit als ein Maß für den zu bestimmenden Abstand verwendet werden. Hierzu ist es bekannt, den lichtempfindlichen Bereich des Empfängers in zwei Unterbereiche zu unterteilen, nämlich einen Nahbereich und einen Fernbereich. Die Verteilung der Intensität des abgebildeten Lichtflecks zwischen dem Nahbereich und dem Fernbereich ist von dem Objektabstand abhängig, so daß die Differenz zwischen den Ausgangssignalen der beiden Bereiche das Maß für den Objektabstand bildet.

Nachteilig an diesen Sensoren ist, daß Störsignale, die dem eigentlichen Empfangssignal, das von dem vom Objekt reflektierten und/oder remittierten Lichtfleck stammt, überlagert sind, nicht als solche erkannt werden können. Quellen derartiger Störsignale sind beispielsweise Fehler oder Verschmutzungen der Sensoroptik, spiegelnde, glänzende oder stark kontrastbehaftete Flächen entweder auf dem Objekt, dessen Abstand bestimmt werden soll, oder auf Störobjekten, die seitlich oder hinter dem zu ertastenden Objekt angeordnet sind und auch als Hintergrundobjekte bezeichnet werden.

Bei dem Abstandssensor der US 4,825,019 wird das Licht einer Infrarot-Laserdiode zur Abstandsmessung verwendet. Im Vorfeld der Abstandsmessung wird eine Positionierung des Messobjekts im Messbereich angestrebt, wobei Lichtflecken von zusätzlichen Pilotstrahlen verwendet werden, die derart ausgestaltet sind, dass sie bei optimaler Positionierung des Messobjektes in einem gemeinsamen Lichtpunkt auf dem Objekt auftreffen.

DE 197 32 376 C1 beschreibt ein Verfahren und eine Vorrichtung zum Bestimmen des Objektabstands zwischen einem Sensor und einem Tastobjekt, wobei mehrere Sendeeinheiten zum Aussenden elektromagnetischer Abtaststrahlen und eine Empfangseinheit zum Nachweisen von reflektierten Abtaststrahlen vorgesehen sind.

Aufgabe der Erfindung ist es, eine Möglichkeit zu schaffen, mit einem nach dem Triangulationsprinzip arbeitenden optoelektronischen Sensor den Abstand zwischen dem Sensor und einem Objekt auf möglichst einfache und zuverlässige Weise unabhängig von eventuell vorhandenen, das eigentliche Empfangssignal verfälschenden Fehlerquellen zu bestimmen.

Die Lösung dieser Aufgabe erfolgt zum einen durch die Merkmale des Verfahrensanspruchs 1.

Erfindungsgemäß stehen durch den Zusatzkanal zusätzliche Informationen zur Verfügung, die durch die gemeinsame Auswertung mit den Informationen aus dem Meßkanal herangezogen werden können, um Fehlerquellen als solche zu identifizieren und so den Einfluß der Fehlerquellen auf die Abstandsmessung zu reduzieren.

Die gemeinsame Auswertung erfolgt in einer dem Sensor zugeordneten Auswerteeinheit, an welche die Empfangseinheit oder Empfangseinheiten angeschlossen sind. In Abhängigkeit von der Ausgestaltung des Verfahrens zur Abstandsbestimmung bzw. von dem Aufbau und der Betriebsweise des Sensors können jeweils geeignete mathematische Auswerteverfahren, z.B. Kreuzkorrelationen zwischen einer abgespeicherten oder eingelernten Intensitätsverteilung der Empfangssignale und einer aktuellen Intensitätsverteilung, zum Einsatz kommen.

Bevorzugt ist es, wenn der Meßkanal und der Zusatzkanal für jeden Objektabstand gemeinsam und insbesondere zumindest im wesentlichen gleichzeitig betrieben werden.

Hierunter fällt es auch, wenn die Kanäle in schneller Folge nacheinander angesteuert werden, indem z.B. mehrere Sendeeinheiten ihre Abtaststrahlen in kurzen Zeitabständen nacheinander aussenden und/oder mehrere Empfangseinheiten nacheinander ausgelesen werden, um den jeweiligen Objektabstand durch gemeinsame Auswertung der Empfangssignale zu bestimmen.

Gemäß der Erfindung ist vorgesehen, daß allein das Empfangssignal des Meßkanals zur Bestimmung eines Abstandswertes verwendet wird, mittels des Empfangssignals des Zusatzkanals festgestellt wird, ob die Empfangssignale zumindest ein Zusatzkriterium erfüllen, und bei erfülltem Zusatzkriterium der Abstandswert als Maß für den Objektabstand verwendet wird.

Für die eigentliche Abstandsmessung wird somit allein das Empfangssignal des Meßkanals verwendet, nachdem mit Hilfe des Empfangssignals des Zusatzkanals überprüft worden ist, ob die Messung gewissen Anforderungen genügt und die Empfangssignale bestimmte Zusatzbedingungen erfüllen. Mittels des Zusatzkanals kann somit entschieden werden, ob das Empfangssignal des Meßkanals verfälscht ist oder nicht.

Bevorzugt ist es, wenn im Meßkanal und/oder im Zusatzkanal jeweils die Intensitätsverteilung des Empfangssignals auf der Empfangseinheit oder auf den Empfangseinheiten für die Abstandsbestimmung verwendet wird.

Als Empfangseinheiten können erfindungsgemäß ortsauflösende Detektoren von grundsätzlich beliebiger Art vorgesehen werden. Die Position eines vom Objekt reflektierten und/oder remittierten Lichtflecks und Informationen über die Umstände der Lichtfleckreflexion und/oder -remission können aus der oder den nachgewiesenen Intensitätsverteilungen abgelesen werden.

In einem bevorzugten Ausführungsbeispiel der Erfindung wird für den Meßkanal und den Zusatzkanal eine gemeinsame Empfangseinheit verwendet.

Wird mit zumindest zwei Empfangseinheiten gearbeitet, können diese so betrieben werden, daß die ausgesandten Abtaststrahlen an unterschiedlichen Positionen auf dem Objekt auftreffen, so daß auf der Empfangseinheit ein entsprechender Positionsunterschied detektiert wird.

Dabei können zur Bildung des Meßkanals und des Zusatzkanals die beiden Sendeeinheiten die Abtaststrahlen in unterschiedliche Richtungen aussenden. Dann werden vorzugsweise bei der gemeinsamen Auswertung einander entsprechende charakteristische Bereiche der Empfangssignale des Meßkanals und des Zusatzkanals jeweils daraufhin untersucht, ob sie insbesondere um ein erwartetes Maß gegeneinander verschoben sind.

Alternativ ist bei der Verwendung mehrerer Sendeeinheiten gemäß einer weiteren Ausführungsform der Erfindung vorgesehen, daß die Abtaststrahlen des Meßkanals und des Zusatzkanals auf unterschiedliche Entfernungen fokussiert werden, wobei bevorzugt in einem Kanal auf einen Nahbereich und im anderen Kanal auf einen Fernbereich fokussiert wird.

Dann werden vorzugsweise bei der gemeinsamen Auswertung einander entsprechende charakteristische Bereiche der Empfangssignale des Meßkanals und des Zusatzkanals jeweils daraufhin untersucht, ob die ausgesandten Abtaststrahlen mit insbesondere gemäß einem erwarteten Maß unterschiedlicher Schärfe abgebildet werden.

In einer weiteren, mehrere Sendeeinheiten verwendenden Alternative ist gemäß einer weiteren Ausführungsform der Erfindung vorgesehen, daß die Abtaststrahlen des Zusatzkanals gezielt derart und insbesondere unfokussiert, gestreut, aufgeweitet und/oder diffus ausgesandt werden, daß eine räumlich ausgedehnte Abtastzone in den Meßbereich ausgesandt wird. Dabei kann die Abtastzone bevorzugt einen wesentlichen Teil des tastobjektseitigen Halbraums des Sensors oder zumindest im wesentlichen den gesamten Halbraum abdecken.

Dann wird bei der gemeinsamen Auswertung vorzugsweise eine Differenz zwischen den Empfangssignalen des Meßkanals und des Zusatzkanals gebildet. Hierbei wird bevorzugt zunächst das Empfangssignal des Zusatzkanals vom Empfangssignal des Meßkanals abgezogen, negative Differenzwerte werden anschließend gleich Null gesetzt, und ein resultierendes positives Differenzsignal wird dann für die Abstandsbestimmung verwendet.

Mit der räumlich ausgedehnten Abtastzone kann das zu Störsignalen führende Streulicht nachgebildet werden, so daß kritische Sichtbereiche des Sensors auf das Vorhandensein von Störobjekten überwacht werden können.

Erfindungsgemäß können nicht nur mehrere Sendeeinheiten vorgesehen werden, sondern es kann alternativ auch empfangsseitig eine Unterteilung in mehrere Empfangseinheiten und/oder Empfangsoptiken erfolgen.

Gemäß einer bevorzugten Variante der Erfindung wird für die Empfangssignale jeweils ein Schwerpunkt und der Abstand des Schwerpunkts von der Position der Sendeeinheit ermittelt, und wird der Mittelwert der Schwerpunktsabstände als Maß für den Objektabstand verwendet.

Während die Verwendung mehrerer Sendeeinheiten insbesondere dann in Frage kommt, wenn neben oder hinter dem zu ertastenden Objekt spiegelnde oder glänzende Störobjekte zu erwarten sind, werden mehrere Empfangseinheiten und/oder Empfangsoptiken insbesondere dann eingesetzt, wenn Fehler aufgrund eines relativ stark kontrastbehafteten Tastobjekts erwartet werden.

Alle in den Ansprüchen, der Beschreibungseinleitung und der nachfolgenden Figurenbeschreibung erwähnten Varianten der Erfindung können - sofern sie einander nicht widersprechen - auch miteinander kombiniert werden, wodurch eine besonders sichere und zuverlässige Bestimmung des Objektabstands möglich ist.

Die Lösung der der Erfindung zugrundeliegenden Aufgabe erfolgt zum anderen durch die Merkmale des unabhängigen Vorrichtungsanspruchs 11.

Vorzugsweise sind alle Sende- und Empfangseinheiten in einer gemeinsamen Sensorebene angeordnet, die bevorzugt senkrecht zu der den kürzesten Abstand zwischen dem Sensor und dem Objekt entsprechenden Abstandsrichtung, die auch als Sende- und/oder Empfangsachse bezeichnet wird, verläuft.

Bevorzugt ist die oder jede Sendeeinheit in Form einer LED oder einer Lasereinrichtung, beispielsweise einer Laserdiode, vorgesehen. Des weiteren ist vorzugsweise die oder jede Empfangseinheit in Form eines ortsauflösenden Detektors z.B. in Form eines ein- oder mehrreihigen Fotodioden-Arrays, einer CCD (Charge Coupled Device) oder einer PSD (Position Sensitive Device) vorgesehen.

Weitere Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:

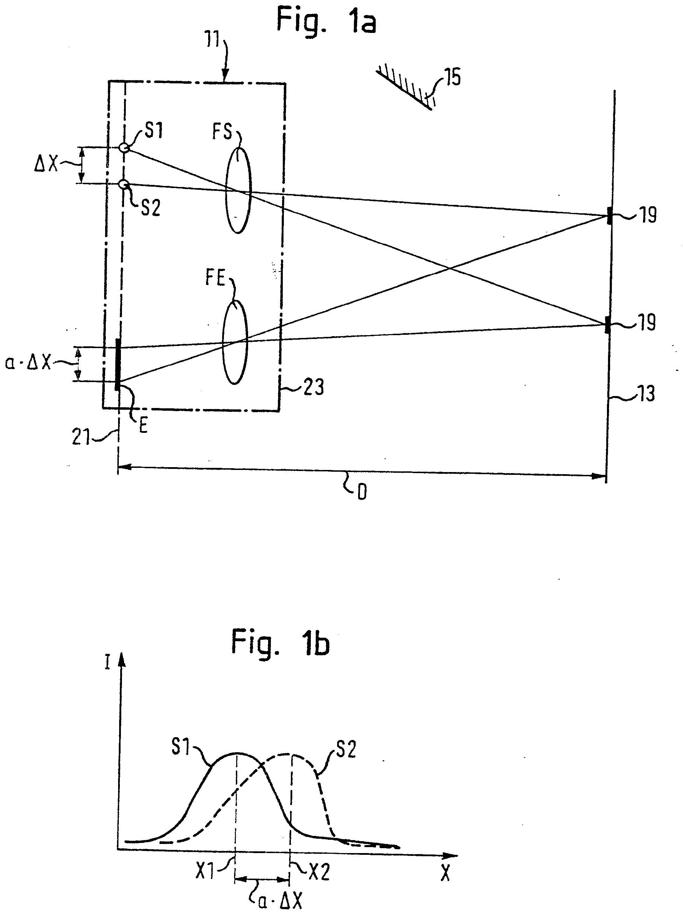

- Fig. 1 - 3: jeweils in schematischen Darstellungen verschiedene Ausführungsformen der Erfindung, und zwar jeweils eine Sensoranordnung (Fig. 1a, 2a, 3a) und empfangsseitige Intensitätsverteilungen (Fig. 1b, 2b, 3b).

In dem Ausführungsbeispiel der Erfindung gemäß Fig. 1a und 1b umfaßt der Sensor 11 zwei räumlich getrennte, in einer Sensorebene 21 um ΔX beabstandete Sendeeinheiten S1 und S2 z.B. in Form einer LED oder einer Laserdiode. Den Sendeeinheiten S1 und S2 ist eine gemeinsame Sendeoptik FS z.B. in Form einer Linse zur Fokussierung der Abtaststrahlen zugeordnet.

Des weiteren weist der Sensor 11 für die beiden Sendeeinheiten S1, S2 eine gemeinsame Empfangseinheit E z.B. in Form eines ein- oder mehrreihigen Fotodioden-Arrays auf, die ebenfalls in der Sensorebene 21 angeordnet ist. Der Empfangseinheit E ist eine z.B. als Linse ausgebildete Empfangsoptik FE zugeordnet. Alternativ könnte die Empfangseinheit E auch außerhalb der Sensorebene 21 angeordnet sein.

Die erwähnten Sensorkomponenten sind in einem gemeinsamen Sensorgehäuse 23 angeordnet, das in Fig. 1a durch eine strichpunktierte Linie angedeutet ist.

Der Sensor 11 dient dazu, den im folgenden als Objektabstand bezeichneten Abstand D zwischen dem Sensor 11 und einem im Meßbereich des Sensors 11 liegenden Tastobjekt 13 zu bestimmen. Als Bezugsebene für die Abstandsbestimmung dient am Sensor 11 z.B. die Sensorebene 21, wie es in Fig. 1a angedeutet ist.

Der Sensor 11 arbeitet nach dem Triangulationsprinzip. Von den Sendeeinheiten S1, S2 ausgesandte Abtaststrahlen werden nach Durchgang durch die Sendeoptik FS vom Tastobjekt 13 reflektiert und/oder remittiert und mittels der Empfangsoptik FE auf der gemeinsamen Empfangseinheit E abgebildet. Jede Sendeeinheit S1, S2 erzeugt auf dem Tastobjekt 13 einen Lichtfleck oder Tastfleck 19, der auf der Empfangseinheit E abgebildet wird und dessen Position auf der Empfangseinheit E vom Objektabstand D abhängig ist.

Wenn keine Störquellen vorhanden sind, dann kann bereits aus der Position eines Tastflecks auf der Empfangseinheit E der Objektabstand D bestimmt werden.

Das erfindungsgemäße Vorsehen von zwei separaten, gemeinsam betriebenen Kanälen, d.h. einem Meßkanal S1-E und einem Zusatzkanal S2-E, gestattet eine sichere und zuverlässige Messung des Objektabstands D auch dann, wenn Störquellen vorhanden sind, die von den Sendeeinheiten S1, S2 ausgesandte Strahlung auf die Empfangseinheit E reflektieren und/oder remittieren und so die eigentlichen, vom Tastobjekt 13 stammenden Empfangssignale verfälschen. Bei den Störobjekten kann es sich beispielsweise um Flächen mit hohem Reflexions- und/oder Remissionsvermögen, insbesondere spiegelnde Flächen, neben oder hinter dem Tastobjekt 13 handeln. In Fig. 1a ist ein derartiges spiegelndes Störobjekt 15 schematisch dargestellt, das sich außerhalb der Sendeachse befindet.

Der Einfluß des Störobjekts 15 sowie die erfindungsgemäße Vorgehensweise, um das Störsignal von den Nutzsignalen zu trennen, sind in Fig. 1b angedeutet.

Fig. 1b zeigt die Verteilung der Intensität I der auf die Empfangseinheit E insgesamt reflektierten und/oder remittierten Strahlung von Nutzsignalen in einer Richtung X. Die Intensitätsverteilung der Sendeeinheit S1 ist mit einer durchgezogenen, diejenige der Sendeeinheit S2 mit einer gestrichelten Linie angedeutet. Jede Intensitätsverteilung weist zwei charakteristische Bereiche auf, nämlich ein dargestelltes Nutzsignal mit einem Schwerpunkt bei X1 bzw. X2, das dem vom Tastobjekt 13 reflektierten und/oder remittierten Tastfleck 19 entspricht, sowie ein nicht dargestelltes Störsignal. Die Störsignale weisen auf der Empfangseinheit E einen bezogen auf beide Sendeeinheiten S1 und S2 ortsgleichen Schwerpunkt auf.

Ein Maß für den korrekten Objektabstand D bilden lediglich die Positionen X1 und X2. Die Auswertung der Position des Schwerpunkts der Störsignale würde zu einem falschen Objektabstand führen. Wenn lediglich ein einziger Meßkanal vorhanden sein und somit nur ein einziger Intensitätsverlauf zur Verfügung stehen würde, dann bestünde ohne Zusatzinformationen die Gefahr, daß der Sensor 11 das Störsignal als Nutzsignal wertet und durch die Auswertung der Position des Schwerpunkts der Störsignale einen falschen Abstandswert liefert.

Durch das erfindungsgemäße Vorsehen eines Zusatzkanals, der in dem vorliegenden Ausführungsbeispiel durch Vorsehen einer zusätzlichen Sendeeinheit S2 realisiert wird, kann jedoch das Störsignal als solches identifiziert werden. Ausgenutzt wird hierzu der Umstand, daß der Abstand a · ΔX der beiden Empfangssignale auf der Empfangseinheit E proportional zum Abstand ΔX der beiden Sendeeinheiten S1, S2 in der entsprechenden Richtung ist. Der Proportionalitätsfaktor a ist von den Abbildungseigenschaften der Sendeoptik FS und der Empfangsoptik FE abhängig, d.h. es gilt a = f (FS, FE). Diese Beziehung gilt für alle Objektabstände D, d.h. der Zusammenhang zwischen ΔX einerseits und a · ΔX andererseits ist unabhängig vom Objektabstand D.

Bei der erfindungsgemäßen gemeinsamen Auswertung der Empfangssignale des Meßkanals S1-E und des Zusatzkanals S2-E werden charakteristische Bereiche der Intensitätsverläufe in Form von Peaks, die einem vom Tastobjekt 13 reflektierten und/oder remittierten Tastfleck entsprechen könnten, daraufhin untersucht, ob sie um das erwartete Maß a · ΔX gegeneinander verschoben sind. Ist dies nicht der Fall, dann scheiden diese charakteristischen Bereiche bei der Abstandsbestimmung aus, und es erfolgt entweder eine Fehlermeldung oder es werden weitere charakteristische Bereiche der Intensitätsverteilungen überprüft.

Wird dagegen festgestellt, daß zwei Peaks der Intensitätsverteilungen um das erwartete Maß a · ΔX gegeneinander verschoben sind, dann wird wenigstens einer dieser Peaks zur Bestimmung des Objektabstands D herangezogen, wobei die Lage von dessen Schwerpunkt X1 bzw. X2 ein Maß für den Objektabstand D darstellt.

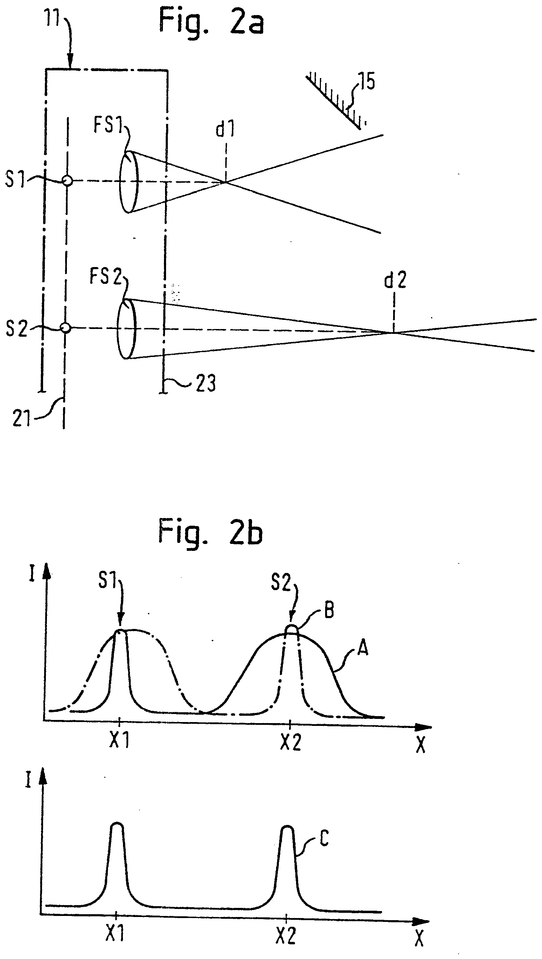

In dem in Fig. 2a und 2b veranschaulichten Ausführungsbeispiel der Erfindung ist der Sensor 11 wiederum mit zwei separaten Sendeeinheiten S1 und S2 versehen, denen eine gemeinsame, nicht dargestellte Empfangseinheit zugeordnet ist. In dieser Ausführungsform ist jeder Sendeeinheit S1, S2 eine eigene Sendeoptik FS1, FS2 z.B. in Form einer Linse zugeordnet.

Die Sendeoptiken FS1 und FS2 unterscheiden sich dadurch, daß sie die von den Sendeeinheiten S1 und S2 ausgesandten Abtaststrahlen auf unterschiedliche Entfernungen d1 bzw. d2 fokussieren. In Abhängigkeit von dem zu ermittelnden Abstand eines in Fig. 2a nicht dargestellten Tastobjekts vom Sensor 11 wird somit der Tastfleck der einen Sendeeinheit S1 schärfer oder weniger scharf auf der Empfangseinheit abgebildet als der Tastfleck der anderen Sendeeinheit S2.

Die erwartete Intensitätsverteilung der Nutzsignale entspricht prinzipiell den Verteilungen A, B, die in der oberen Darstellung der Fig. 2b schematisch gezeigt sind. Befindet sich das Tastobjekt relativ nahe am Sensor 11, so wird der Tastfleck der einen Sendeeinheit auf dem Empfänger schärfer abgebildet als derjenige der anderen Sendeeinheit, wobei der Unterschied in der Schärfe durch die unterschiedlichen Breiten der einander entsprechenden charakteristischen Bereiche oder Peaks der jeweiligen Intensitätsverteilung A oder B detektiert werden kann. Bei einem relativ weit vom Sensor 11 entfernten Tastobjekt ist es umgekehrt, d.h. es wird der andere Tastfleck schärfer abgebildet.

Fällt Störstrahlung, z.B. aufgrund eines spiegelnden Störobjekts 15 (vgl. Fig. 2a), auf die Empfangseinheit, so ergibt sich beispielsweise die in der unteren Darstellung von Fig. 2b schematisch gezeigte Intensitätsverteilung C. Das Störsignal des Störobjekts 15 kann also zur Folge haben, daß nicht mehr aufgrund eines einem erwarteten Maß entsprechenden Unterschieds in der Schärfe der abgebildeten Tastflecken davon ausgegangen werden kann, daß die Peaks zur Bestimmung des korrekten Objektabstands herangezogen werden können.

Durch den Nachweis eines nicht den erwarteten Intensitätsverlauf aufweisenden Empfangssignals kann also das Vorhandensein eines die Messung verfälschenden Störobjekts 15 erkannt werden.

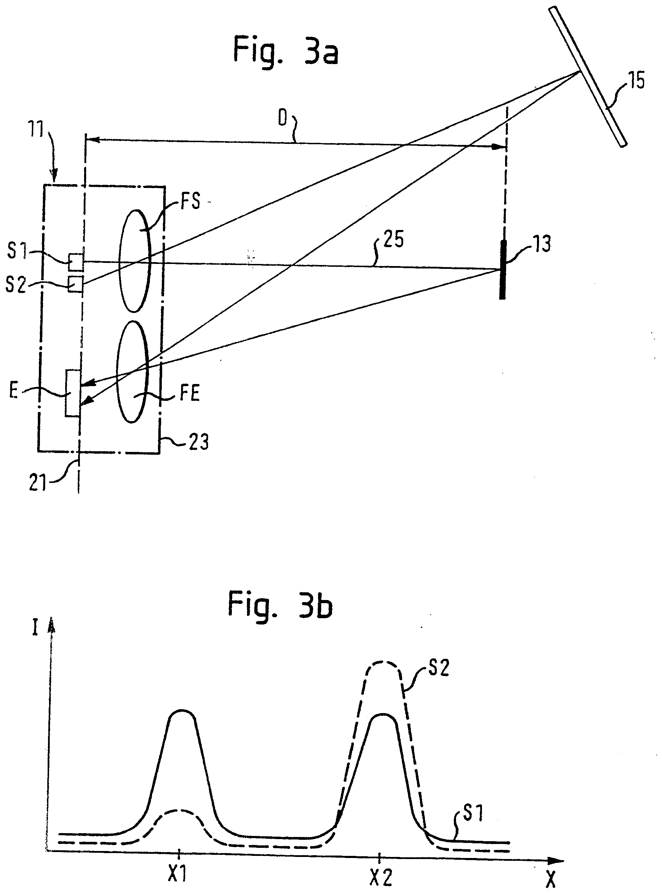

Das Ausführungsbeispiel der Erfindung gemäß Fig. 3a und 3b zeigt eine weitere Möglichkeit, einen Zusatzkanal zu nutzen, um den die Messung des Objektabstands D verfälschenden Einfluß eines Störobjekts 15 unschädlich zu machen.

Der Sensor 11 umfaßt zwei Sendeeinheiten S1 und S2 sowie eine gemeinsame Empfangseinheit E. Es sind eine gemeinsame Sendeoptik FS für die beiden Sendeeinheiten S1, S2 in Form einer Linse sowie für die Empfangseinheit E eine Empfangsoptik FE vorgesehen, die ebenfalls als Linse ausgebildet ist.

Während im von der Sendeeinheit S1 und der Empfangseinheit E gebildeten Meßkanal S1-E die ausgesandten Abtaststrahlen 25 fokussiert werden, um auf dem Tastobjekt 13 einen Tastfleck zu erzeugen, wird im Zusatzkanal S2-E dafür gesorgt, daß eine im Vergleich zu den Abtaststrahlen 25 des Meßkanals S1-E räumlich wesentlich weiter ausgedehnte Abtastzone in den tastobjektseitigen Halbraum des Sensors 11 ausgesandt wird. Die Abtastzone kann durch gezielte Nicht-Fokussierung, Streuung, Aufweitung und/oder diffuse Aussendung der Abtaststrahlen der Sendeeinheit S2 erzeugt werden.

Mit der Abtastzone wird gezielt Störstrahlung nachgebildet, die beispielsweise durch Streuung in der Sendeeinheit S2, durch Reflexionen und/oder Remissionen an optischen Elementen wie z.B. Blenden oder Tuben sowie durch Defekte der Sendeoptik FS, z.B. Kratzer, Staub oder Schlieren an einer Sendelinse, hervorgerufen und von einem Störobjekt 15 auf die Empfangseinheit E reflektiert und/oder remittiert wird.

Fig. 3b zeigt die Intensitätsverteilungen der von den beiden Sendeeinheiten S1, S2 stammenden Empfangssignale. Es ist ein Fall dargestellt, bei dem aufgrund der vorstehend erwähnten Fehlerquellen auch im Meßkanal S1-E ausgesandte Strahlung auf das Störobjekt 15 trifft und von diesem auf die Empfangseinheit E reflektiert und/oder remittiert wird, wodurch an der Position X2 ein Intensitätspeak erzeugt wird. Der entsprechende Intensitätspeak der Sendeeinheit S2 des Zusatzkanals ist aufgrund der gezielten Nachbildung der Störstrahlung höher als derjenige des Meßkanals, in welchem mit fokussierten Abtaststrahlen 25 gearbeitet wird. An der Position X1 dagegen, die dem zu ermittelnden Objektabstand D entspricht, entsteht im Meßkanal S1-E ein höheres Empfangssignal als im Zusatzkanal S2-E, da die Intensitätsdichte der Abtastzone am Tastobjekt 13 geringer ist als diejenige der Abtaststrahlen 25, mit denen auf dem Tastobjekt 13 ein Tastfleck erzeugt wird.

Die gemeinsame Auswertung der Empfangssignale der beiden Kanäle erfolgt dadurch, daß das Empfangssignal S2 des Zusatzkanals vom Empfangssignal S1 des Meßkanals abgezogen wird und negative Differenzwerte gleich Null gesetzt werden. Übrig bleibt dann ein positives Differenzsignal an der dem Objektabstand D entsprechenden Position X1 auf der Empfangseinheit E. Dieses resultierende positive Differenzsignal wird dann für die Bestimmung des Objektabstands D verwendet.

In dem dargestellten Ausführungsbeispiel sind die Sendeeinheiten S1, S2 und die Empfangseinheit E in der gemeinsamen Sensorebene 21 angeordnet, wobei sich die Sendeeinheit S2 des Zusatzkanals, mittels welcher die räumlich ausgedehnte Abtastzone erzeugt wird, zwischen der Sendeeinheit S1 des Meßkanals und der Empfangseinheit E befindet. Die Abbildung der von den beiden Sendeeinheiten S1, S2 ausgesandten Strahlen erfolgt durch die gemeinsame Sendeoptik FS. Die Intensitäten im Meßkanal und im Zusatzkanal werden derart gewählt, daß an der dem Störobjekt 15 entsprechenden Position X2 auf der Empfangseinheit E der Zusatzkanal ein höheres Signal liefert als der Meßkanal, wie es in Fig. 3b gezeigt ist, damit bei der Auswertung im Anschluß an die Bildung der Differenz zwischen den beiden Empfangssignalen lediglich an der dem Objektabstand D entsprechenden Position X1 ein positives Signal übrig bleibt.

### Bezugszeichenliste

- 11: Sensor
- 13: Tastobjekt
- 15: Störobjekt
- 19: Tastfleck
- 21: Sensorebene
- 23: Sensorgehäuse
- 25: Abtaststrahlen

- D: Objektabstand
- S1, S2: Sendeeinheit
- E: Empfangseinheit
- FS, FS1, FS2: Sendeoptik
- FE: Empfangsoptik

## Patentansprüche

1. Verfahren zum Bestimmen des Objektabstands (D) zwischen einem nach dem Triangulationsprinzip arbeitenden optoelektronischen Sensor (11) und einem Tastobjekt (13),
- wobei der Sensor (11) wenigstens einen Messkanal zwischen einer Sendeeinheit (S1) zum Aussenden elektromagnetischer Abtaststrahlen in den Messbereich und einer Empfangseinheit (E) zum Nachweisen von aus dem Messbereich reflektierten und/oder remittierten Abtaststrahlen aufweist,
- wobei der Sensor (11) zumindest einen Zusatzkanal aufweist, der eine weitere Sendeeinheit (S2) aufweist, und
- wobei bei der Bestimmung des Objektabstands (D) die Empfangssignale des Messkanals und des Zusatzkanals gemeinsam ausgewertet werden,
**dadurch gekennzeichnet, dass**
- allein das Empfangssignal des Messkanals zur Bestimmung eines Abstandswertes verwendet wird,
- mittels des Empfangssignals des Zusatzkanals festgestellt wird, ob die Empfangssignale zumindest ein Zusatzkriterium erfüllen, wobei bei der gemeinsamen Auswertung einander entsprechende charakteristische Bereiche der Empfangssignale des Messkanals und des Zusatzkanals jeweils darauf hin untersucht werden, ob sie um ein erwartetes Maß (a·Δx) gegeneinander verschoben sind, wobei ΔX der Abstand der beiden Sendeeinheiten (S1, S2) ist und der Proportionalitätsfaktor a von den Abbildungseigenschaften der im Messkanal und im Zusatzkanal vorhandenen Sende- bzw. Empfangsoptiken abhängig ist und
- bei erfülltem Zusatzkriterium der Abstandswert als Maß für den Objektabstand (D) verwendet wird.

2. Verfahren nach Anspruch 1, **dadurch gekennzeichnet, dass** der Messkanal und der Zusatzkanal für jeden Objektabstand (D) gemeinsam und insbesondere zumindest im wesentlichen gleichzeitig betrieben werden.

3. Verfahren nach einem der vorhergehenden Ansprüche, **dadurch gekennzeichnet, dass** im Messkanal die Intensitätsverteilung des Empfangssignals auf der Empfangseinheit (E) für die Abstandsbestimmung verwendet wird.

4. Verfahren nach Anspruch 3, **dadurch gekennzeichnet, dass** im Messkanal die Lage eines Schwerpunkts der Intensitätsverteilung oder eines charakteristischen Bereiches der Intensitätsverteilung für die Abstandsbestimmung verwendet wird.

5. Verfahren nach einem der vorhergehenden Ansprüche, **dadurch gekennzeichnet, dass** für den Messkanal und den Zusatzkanal eine gemeinsame Empfangseinheit (E) verwendet wird.

6. Verfahren nach einem der vorhergehenden Ansprüche, **dadurch gekennzeichnet, dass** die Abtaststrahlen des Messkanals und des Zusatzkanals in unterschiedliche Richtungen ausgesandt werden.

7. Verfahren nach einem der vorhergehenden Ansprüche, **dadurch gekennzeichnet, dass** die Abtaststrahlen des Messkanals und des Zusatzkanals auf unterschiedliche Entfernungen (d1, d2) fokussiert werden, wobei bevorzugt in einem Kanal auf einen Nahbereich und im anderen Kanal auf einen Fernbereich fokussiert wird.

8. Verfahren nach Anspruch 7, **dadurch gekennzeichnet, dass** bei der gemeinsamen Auswertung einander entsprechende charakteristische Bereiche der Empfangssignale des Messkanals und des Zusatzkanals jeweils daraufhin untersucht werden, ob die ausgesandten Abtaststrahlen mit insbesondere gemäß einem erwarteten Maß unterschiedlicher Schärfe abgebildet werden.

9. Verfahren nach einem der vorhergehenden Ansprüche, **dadurch gekennzeichnet, dass** die Abtaststrahlen sowohl des Messkanals als auch des Zusatzkanals fokussiert werden.

10. Verfahren nach einem der Ansprüche 1 bis 4, **dadurch gekennzeichnet, dass** für den Messkanal und den Zusatzkanal jeweils eine eigene Empfangseinheit und/oder eine eigene Empfangsoptik verwendet wird.

11. Vorrichtung zum Bestimmen des Objektabstands (D) zwischen einem nach dem Triangulationsprinzip arbeitenden optoelektronischen Sensor (11) und einem Tastobjekt (13),
- mit wenigstens einem Messkanal zwischen einer Sendeeinheit (S1) zum Aussenden elektromagnetischer Abtaststrahlen in den Messbereich und einer Empfangseinheit (E) zum Nachweisen von aus dem Messbereich reflektierten und/oder remittierten Abtaststrahlen,
- mit zumindest einem Zusatzkanal, der eine weitere Sendeeinheit (S2) aufweist, und
- mit einer Auswerteeinheit zur gemeinsamen Auswertung der Empfangssignale des Messkanals und des Zusatzkanals zur Bestimmung des Objektabstands (D),
**dadurch gekennzeichnet, dass**
die Auswerteeinheit derart ausgestaltet ist, dass (i) allein das Empfangssignal des Messkanals zur Bestimmung eines Abstandswertes verwendet wird, (ii) mittels des Empfangssignals des Zusatzkanals festgestellt wird, ob die Empfangssignale zumindest ein Zusatzkriterium erfüllen, wobei bei der gemeinsamen Auswertung einander entsprechende charakteristische Bereiche der Empfangssignale des Messkanals und des Zusatzkanals jeweils darauf hin untersucht werden, ob sie um ein erwartetes Maß (a·ΔX) gegeneinander verschoben sind, wobei ΔX der Abstand der beiden Sendeeinheiten (S1, S2) ist und der Proportionalitätsfaktor a von den Abbildungseigenschaften der im Messkanal und im Zusatzkanal vorhandenen Sende- bzw. Empfangsoptiken abhängig ist und (iii) bei erfülltem Zusatzkriterium der Abstandswert als Maß für den Objektabstand (D) verwendet wird.

12. Vorrichtung nach Anspruch 11, **dadurch gekennzeichnet, dass** für den Messkanal und den Zusatzkanal eine gemeinsame Empfangseinheit (E) vorgesehen ist.

13. Vorrichtung nach Anspruch 11, **dadurch gekennzeichnet, dass** für den Messkanal und den Zusatzkanal jeweils eine eigene Empfangseinheit und/oder eine eigene Empfangsoptik vorgesehen ist.

14. Vorrichtung nach einem der Ansprüche 11 bis 13, **dadurch gekennzeichnet, dass** alle Sende- und Empfangseinheiten (S1, S2, E) in einer gemeinsamen Sensorebene (21) angeordnet sind, die bevorzugt senkrecht zu der dem kürzesten Abstand zwischen dem Sensor (11) und dem Tastobjekt (13) entsprechenden Abstandsrichtung verläuft.

15. Vorrichtung nach Anspruch 11 bis 14, **dadurch gekennzeichnet, dass** jede Sendeeinheit (S, S1, S2) in Form einer LED oder einer Lasereinrichtung vorgesehen ist.

16. Vorrichtung nach einem der Ansprüche 11 bis 15, **dadurch gekennzeichnet, dass** die oder jede Empfangseinheit (E) in Form eines ortsauflösenden Detektors, insbesondere eines ein- oder mehrreihigen Fotodioden-Arrays, einer CCD (Charge Coupled Device) oder einer PSD (Position Sensitive Device) vorgesehen ist.

17. Vorrichtung nach einem der Ansprüche 11 bis 16, **dadurch gekennzeichnet, dass** alle Sende- und Empfangseinheiten (S1, S2, E) in einem gemeinsamen Sensorgehäuse (23) angeordnet sind.

18. Vorrichtung nach einem der Ansprüche 11 bis 17, **dadurch gekennzeichnet, dass** sie zur Durchführung des Verfahrens nach einem der Ansprüche 1 bis 10 verwendet wird.

## Claims

1. A method for the determination of the object distance (D) between an optoelectronic sensor (11) working according to the principle of triangulation and a sensed object (13),
- wherein the sensor (11) has at least one measuring channel between a transmission unit (S1) for the transmission of electromagnetic sensing rays into the measuring zone and a reception unit (E) for the detection of sensing rays reflected and/or remitted from the measuring zone;
- wherein the sensor (11) has at least one additional channel which has a further transmission unit (S2); and
- wherein the received signals of the measuring channel and of the additional channel are jointly evaluated in the determination of the object distance (D);
**characterized in that**
- only the received signal of the measuring channel is used for the determination of a distance value;
- a determination is made by means of the received signal of the additional channel as to whether the received signals satisfy at least one additional criterion, with mutually corresponding characteristic regions of the received signals of the measuring channel and of the additional channel each being examined in the joint evaluation as to whether they are displaced with respect to one another by an expected measure (a·ΔX), where ΔX is the distance of the two transmission units (S1, S2) and the proportionality factor a is dependent on the imaging properties of the transmission optics or reception optics present in the measuring channel and in the additional channel; and
- the distance value is used as a measure for the object distance (D) when an additional criterion is satisfied.

2. A method in accordance with claim 1, **characterized in that** the measuring channel and the additional channel are operated jointly, and in particular at least substantially simultaneously, for each object distance (D).

3. A method in accordance with one of the preceding claims, **characterized in that** the intensity distribution of the received signal at the reception unit (E) is used for the distance determination in the measuring channel.

4. A method in accordance with claim 3, **characterized in that** the position of a center of mass of the intensity distribution or of a characteristic region of the intensity distribution is used for the distance determination in the measuring channel.

5. A method in accordance with any one of the preceding claims, **characterized in that** a common reception unit (E) is used for the measuring channel and the additional channel.

6. A method in accordance with any one of the preceding claims, **characterized in that** the sensing rays of the measuring channel and of the additional channel are transmitted in different directions.

7. A method in accordance with any one of the preceding claims, **characterized in that** the sensing rays of the measuring channel and of the additional channel are focused on different distances (d1, d2), with a near zone preferably being focused on in one channel and a far zone being focused on in another channel.

8. A method in accordance with claim 7, **characterized in that** mutually corresponding characteristic regions of the received signals of the measuring channel and of the additional channel are each examined in the joint evaluation as to whether the transmitted sensing rays are imaged with a different sharpness in particular in accordance with an expected measure.

9. A method in accordance with any one of the preceding claims, **characterized in that** the sensing rays of both the measuring channel and the additional channel are focused.

10. A method in accordance with any one of the claims 1 to 4, **characterized in that** a separate reception unit and/or a separate reception optics is/are respectively used for the measuring channel and for the additional channel.

11. An apparatus for the determination of the object distance (D) between an optoelectronic sensor (11) working according to the principle of triangulation and a sensed object (13),
- having at least one measuring channel between a transmission unit (S1) for the transmission of electromagnetic sensing rays into the measuring zone and a reception unit (E) for the detection of sensing rays reflected and/or remitted from the measuring zone;
- having at least one additional channel which has a further transmission unit (S2); and
- having an evaluation unit for the joint evaluation of the received signals of the measuring channel and of the additional channel in order to determine the object distance (D),
**characterized in that**
the evaluation unit is designed such that (i) only the received signal of the measuring channel is used for the determination of a distance value; (ii) a determination is made by means of the received signal of the additional channel as to whether the received signals satisfy at least one additional criterion, with mutually corresponding characteristic regions of the received signals of the measuring channel and of the additional channel each being examined in the joint evaluation as to whether they are displaced with respect to one another by an expected measure (a·ΔX), where ΔX is the distance of the two transmission units (S1, S2) and the proportionality factor a is dependent on the imaging properties of the transmission optics or reception optics present in the measuring channel and in the additional channel; and (iii) the distance value is used as a measure for the object distance (D) when an additional criterion is satisfied.

12. An apparatus in accordance with claim 11, **characterized in that** a common reception unit (E) is provided for the measuring channel and the additional channel.

13. An apparatus in accordance with claim 11, **characterized in that** a separate reception unit and/or a separate reception optics is/are respectively provided for the measuring channel and for the additional channel.

14. An apparatus in accordance with any one of the claims 11 to 13, **characterized in that** all the transmission units and reception units (S1, S2, E) are arranged in a common sensor plane (21) which preferably extends perpendicular to the distance direction corresponding to the shortest distance between the sensor (11) and the sensed object (13).

15. An apparatus in accordance with claims 11 to 14, **characterized in that** each transmission unit (S, S1, S2) is provided in the form of an LED or a laser device.

16. An apparatus in accordance with any one of the claims 11 to 15, **characterized in that** the or each reception unit (E) is provided in the form of a spatially resolving detector, in particular of a single-row or multi-row photodiode array, of a CCD (charge coupled device) or of a PSD (position sensitive device).

17. An apparatus in accordance with any one of the claims 11 to 16, **characterized in that** all the transmission units and reception units (S1, S2, E) are arranged in a common sensor housing (23).

18. An apparatus in accordance with any one of the claims 11 to 17, **characterized in that** it is used for carrying out the method in accordance with any one of the claims 1 to 10.

## Revendications

1. Procédé pour déterminer la distance objet (D) entre un capteur optoélectronique (11) fonctionnant selon le principe de triangulation et un objet cible (13),
- dans lequel le capteur (11) comprend au moins un canal de mesure entre une unité émettrice (S1) pour émettre des rayons de palpage électromagnétiques dans la plage de mesure et une unité réceptrice (E) pour mettre en évidence des rayons de palpage réfléchis et/ou réémis depuis la plage de mesure ;
- dans lequel le capteur (11) comprend au moins un canal supplémentaire qui comporte une autre unité émettrice (S2),
- dans lequel, pour déterminer la distance objet, les signaux reçus du canal de mesure et du canal supplémentaire sont exploités en commun,
**caractérisé en ce que**
- uniquement le signal de réception du canal de mesure pour déterminer une valeur de distance est utilisé,
- au moyen du signal de réception du canal supplémentaire, s'effectue la constatation quant à savoir si les signaux reçus satisfont au moins un critère supplémentaire, et lors de l'évaluation commune, des plages caractéristiques mutuellement correspondantes des signaux reçus du canal de mesure et du canal supplémentaire sont analysées quant à savoir si elles sont mutuellement décalées d'une valeur attendue (a · ΔX), ΔX étant la distance des deux unités émettrices (S1, S2) et le facteur de proportionnalité a dépendant des propriétés d'imagerie des systèmes optiques émetteur ou récepteur présents dans le canal de mesure et dans le canal supplémentaire, et
- lorsque le critère supplémentaire est satisfait, la valeur de distance est utilisée à titre de mesure pour la distance objet (D).

2. Procédé selon la revendication 1,
**caractérisé en ce que** le canal de mesure et le canal supplémentaire pour chaque distance objet (D) sont exploités conjointement et en particulier au moins essentiellement simultanément.

3. Procédé selon l'une des revendications précédentes, **caractérisé en ce que**, dans le canal de mesure, la répartition d'intensité du signal reçu sur l'unité réceptrice (E) est utilisée pour la détermination de distance.

4. Procédé selon la revendication 3, **caractérisé en ce que**, dans le canal de mesure, la position d'un barycentre de la répartition d'intensité ou d'une zone caractéristique de la répartition d'intensité est utilisée pour la détermination de distance.

5. Procédé selon l'une des revendications précédentes, **caractérisé en ce qu'**une unité réceptrice commune (E) est utilisée pour le canal de mesure et pour le canal supplémentaire.

6. Procédé selon l'une des revendications précédentes, **caractérisé en ce que** les rayons de palpage du canal de mesure et du canal supplémentaire sont émis dans des directions différentes.

7. Procédé selon l'une des revendications précédentes, **caractérisé en ce que** les rayons émis du canal de mesure et du canal supplémentaire sont focalisés à des éloignements différents (d1, d2), et de préférence la focalisation a lieu dans un canal dans une zone proche et dans l'autre canal dans une zone éloignée.

8. Procédé selon la revendication 7, **caractérisé en ce que**, lors de l'évaluation commune, des zones caractéristiques mutuellement correspondantes des signaux reçus du canal de mesure et du canal supplémentaire sont analysées respectivement quant à savoir si les rayons de palpage émis sont imagés avec une netteté, en particulier avec une différence de netteté suivant un degré attendu.

9. Procédé selon l'une des revendications précédentes, **caractérisé en ce que** les rayons de palpage, aussi bien du canal de mesure que du canal supplémentaire, sont focalisés.

10. Procédé selon l'une des revendications 1 à 4, **caractérisé en ce qu'**une unité réceptrice propre et/ou un système optique récepteur propre sont utilisés respectivement pour le canal de mesure et pour le canal supplémentaire.

11. Dispositif pour déterminer la distance objet (D) entre un capteur optoélectronique fonctionnant selon le principe de triangulation et un objet cible (13),
- comprenant au moins un canal de mesure entre une unité émettrice (S1) pour émettre des rayons de palpage électromagnétiques dans la plage de mesure et une unité réceptrice (E) pour mettre en évidence des rayons de palpage réfléchis et/ou réémis depuis la plage de mesure,
- comprenant au moins un canal supplémentaire qui comporte une autre unité émettrice (S2), et
- comprenant une unité d'évaluation pour l'évaluation commune des signaux reçus du canal de mesure et du canal supplémentaire pour déterminer la distance objet (D),
**caractérisé en ce que** l'unité d'évaluation est conçue de telle manière que
(i) uniquement le signal de réception du canal de mesure pour déterminer une valeur de distance est utilisé,
(ii) au moyen du signal de réception du canal supplémentaire, s'effectue la constatation quant à savoir si les signaux reçus satisfont au moins un critère supplémentaire, et lors de l'évaluation commune, des plages caractéristiques mutuellement correspondantes des signaux reçus du canal de mesure et du canal supplémentaire sont analysées quant à savoir si elles sont mutuellement décalées d'une valeur attendue (a · ΔX), ΔX étant la distance des deux unités émettrices (S1, S2) et le facteur de proportionnalité a dépendant des propriétés d'imagerie des systèmes optiques émetteur ou récepteur présents dans le canal de mesure et dans le canal supplémentaire, et
(iii) lorsque le critère supplémentaire est satisfait, la valeur de distance est utilisée à titre de mesure pour la distance objet (D).

12. Dispositif selon la revendication 11, **caractérisé en ce qu'**il est prévu une unité réceptrice commune (E) pour le canal de mesure et pour le canal supplémentaire.

13. Dispositif selon la revendication 11, **caractérisé en ce qu'**il est prévu respectivement une unité réceptrice propre et/ou un système optique récepteur propre pour le canal de mesure et pour le canal supplémentaire.

14. Dispositif selon l'une des revendications 11 à 13, **caractérisé en ce que** toutes les unités réceptrices (S1, S2, E) sont agencées dans un plan capteur commun (21), qui s'étend de préférence perpendiculairement à la direction correspondant à la plus courte distance entre le capteur (11) et l'objet cible (13).

15. Dispositif selon les revendications 11 à 14, **caractérisé en ce que** chaque unité émettrice (S, S1, S2) est prévue sous la forme d'une diode électroluminescente ou d'un composant à laser.

16. Dispositif selon l'une des revendications 11 à 15, **caractérisé en ce que** l'unité réceptrice ou chaque unité réceptrice (E) est prévue sous la forme d'un détecteur à résolution locale, en particulier d'un réseau de photodiodes à une ou plusieurs rangées, d'un dispositif CCD (Charge Coupled Device), ou d'un dispositif PSD (Position Sensitive Device).

17. Dispositif selon l'une des revendications 11 à 16,
**caractérisé en ce que** toutes les unités émettrices et réceptrices (S1, S2, E) sont agencées dans un boîtier de capteur commun (23).

18. Dispositif selon l'une des revendications 11 à 17, **caractérisé en ce qu'**il est utilisé pour la mise en oeuvre du procédé selon l'une des revendications 1 à 10.
